# EUROPEAN PATENT APPLICATION

(11) **EP 1 267 200 A1**
(43) Date of publication of application: **18.12.2002**
(21) Application number: 02254053.8
(22) Date of filing: 11.06.2002
(51) Int. Cl.: G02F 1/17, G09F 9/37

(54) **Magnetic display device**

(30) Priority: 12.06.2001 JP 2001177128
(71) Applicant: JAPAN CAPSULAR PRODUCTS, INC., Chiyoda-ku, Tokyo 101 (JP)
(72) Inventor: Kanno, Yasuyuki Japan Capsular Products, Inc, Chiyoda-ku Tokyo (JP)
(74) Representative: Rees, Alexander Ellison

(57) **Abstract**

To provide a magnetic display in which a character or image of a black color formed of magnetic fine particles such as black iron oxide fine particles may readily be changed into a variety of interference colors with a simple structure without deteriorating a function of a conventional magnetic display. A microcapsule layer containing and sealing light-reflective non-magnetic fine particles and black magnetic fine particles dispersed in an oily liquid is coated in a space between two non-magnetic substrates at least one of which is transparent to form a display sheet, a magnetic field for forming a character or image is applied from a surface of the display with a transparent substrate side being a front surface side thereof and a magnetic field for erasing the character or image is applied from a back surface thereof so that positions of the black magnetic fine particles and the light-reflective non-magnetic fine particles within the microcapsules are inverted to thereby form the character or image. A pearl pigment layer exhibiting a variety of interference colors is applied onto the front surface or the back surface of the transparent substrate.

## Description

### BACKGROUND OF THE INVENTION

### 1. Field of the Invention

The present invention relates to a magnetic display, which is constructed such that black magnetic fine particles and light-reflective non-magnetic fine particles are used as color elements for forming a character or image of a black color on a white background, both particles are dispersed into a dispersion medium, the dispersed liquid is sealed into microcapsules, and the microcapsules are applied in a space between two substrates, or a magnetic display having such a structure that a space between the two substrates are partitioned into a number of small cavities, and each of which is filled with the dispersion liquid, characterized in that the black magnetic fine particles or the black color inherent in the granular particle to be used for forming the character or image of the black color on the background of the magnetic display, is changed into a variety of interference colors; and a magnetic display having one of such structures that the microcapsules are applied between the two substrates and that the space between the two substrates are partitioned into a number of small cavities, characterized in that dye or pigment is added into the microcapsule layer or into the small cavities for coloring them, to obtain an effect of the interference colors not only to the character or image formation portion but also the background portion thereof to thereby obtain a color contrast of the mutual interference colors generated in both the character and image formation portions and the background portion. Also, the present invention relates to a magnetic display having a structure in which fine magnetic flakes having a shape anisotropy is used for forming a character or image by using reflection and transmission of an incident light, the flakes are dispersed into oily liquid and sealed into microcapsules, and the microcapsule layer is applied onto a non-magnetic sheet, characterized in that the black color exhibited by the transmission of the incident light upon the image formation of the magnetic display is changed into a variety of interference colors.

### 2. Description of the Related Art

Magnetic displays currently on the market can be classified into two groups with respect to their image formation methods.
(1) A magnetic display having such a structure that two components of magnetic particles and non-magnetic particles are dispersed in a liquid and an external magnetic field is applied thereto to shift the positions of both components to a front surface or a back surface of the display, thereby forming a character or image. In this case, black iron oxide fine particles or granulated particles thereof or the like having excellent light-absorption property (i.e., absorbing full wavelength range of visible light) is used as the magnetic particles, while a white pigment such as titanium dioxide having excellent light-reflection property (i.e., having high reflectivity to allow scatter reflections of an incident light) is used as the non-magnetic particles. Therefore, a color contrast is provided using black color and white color inherent in the respective components.
(2) A magnetic display having such a structure that one component of the magnetic particles having a shape anisotropy is dispersed and suspended in a liquid, followed by an application of a magnetic field from the outside in a horizontal or vertical direction to change the orientation of magnetic particles from horizontal to vertical and vice versa. Therefore, a color contrast is provided using the reflection of the incident light on the surfaces of the magnetic particles at the time of the horizontal orientation and the transmission of the incident light at the time of the vertical orientation.

In the above-mentioned magnetic display (1), since the two components of magnetic particles and non-magnetic particles are dispersed into the liquid and the positions of the two components are inverted in the dispersion liquid to form an image, it is necessary to provide a reasonable sealed container for keeping on the display surface the dispersion liquid in which the two components are not locally positioned but uniformly dispersed.

### <Distinct features of the conventional magnetic display>

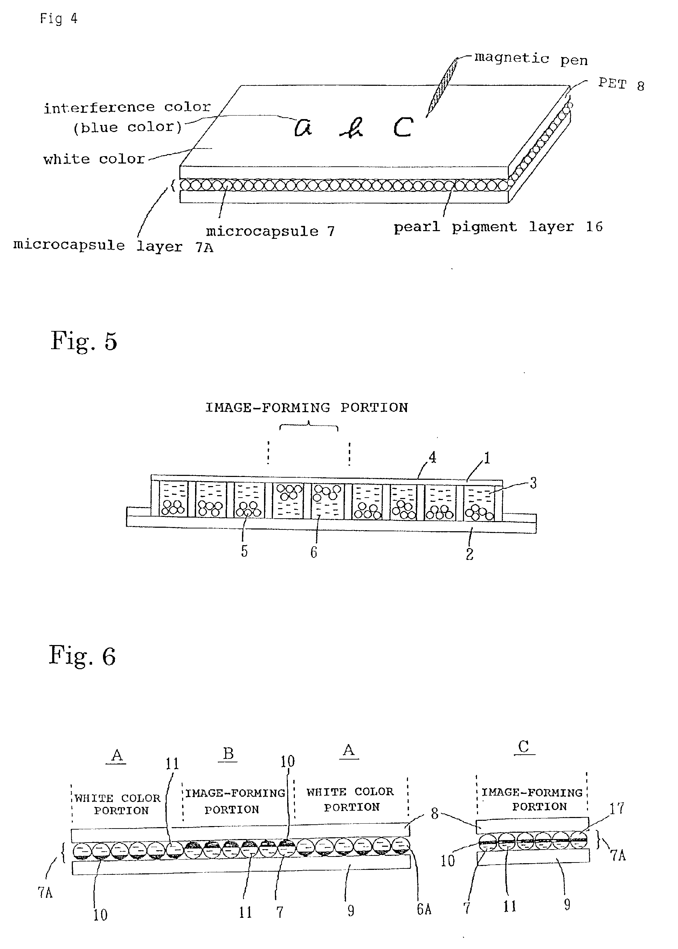

A sealed container used in the conventional magnetic display uses, as shown in Fig. 5, a plurality of small cavities 3 which are obtained by dividing the space between two non-magnetic substrates 1, 2, at least one of which is transparent, by honeycomb partitioning walls or other similar cell partitioning walls, in which the dispersion liquid is filled in each of the small cavities. In this case, the small cavities 3 as the containers have an aim of sealing the dispersion liquid therein, and also have a function of preventing two components of black magnetic particles 5 and light-reflective non-magnetic fine particles 6 for forming an image on respective parts of the display surface 4, from unevenly distributing on a part of the display surface 4. Further, dimensions of the black magnetic particles 5 is selected so as to be adequate to the dimensions of the small cavities 3. Also, the viscosity and thixotropic property of dispersant are designed so as to be adequate to the dimensions and specific gravity of the black magnetic particles 5. That is, the black magnetic particles 5 used are those being granulated to the dimensions thereof to match with liquid viscosity and thixotropic property of the dispersant designed to prevent an abrupt precipitation of black magnetic particles 5 after the image formation, and are characterized to be moved at a sufficient speed even though they are in the liquid having the above viscosity when the external magnetic field is applied for image formation or erasure.

### <Distinct features of the improved magnetic display>

In contrast to the conventional one characterized as described above, as shown in Fig. 6, the improved magnetic display includes microcapsules 7 as fine containers which is incomparably small relative to the above small cavities 3. A microcapsule layer 7A is applied between two non-magnetic substrates 8, 9 in which at least one of them is transparent. Here, the dimensions of both the honeycomb cell 3 and the microcapsule 7 are simply compared in terms of their volumes. As the volume of the honeycomb cell 3 is 6.99 mm³ and the volume of the microcapsule 7 is 0.014 mm³, the volume of the later is about 1/499 of the volume of the former and thus the microcapsule 7 can be a minute container. Therefore, the magnetic particles to be used have sufficient functions even though they are fine particles (fine powders) having the particle diameter of about 1/170, allowing a stable image formation in the dispersant having a comparatively low viscosity appropriate to such a particle size.

In the improved magnetic display, the usage of microcapsule 7 as a sealed container for containing dispersion liquid in which display elements (black magnetic fine particles 10 and light-reflective non-magnetic fine particles 11) are dispersed has an excellent advantage in resource saving as the size reduction of the sealed container is attained as described above in addition to an excellent advantage in the liquid sealing performance, compared with a system in which the dispersion liquid is stored in honeycomb small cavities 3 formed by mechanically providing the respective partitions between two conventional hard substrates 1, 2. For example, the conventional magnetic display has a hard panel structure in which partitions in the shape of honeycombs are bonded between two hard plastic substrates, so that there is a fear that any bonding portion of the partition may be peeled off by the application of a force enough to cause a slight warp in the panel. In this case, the dispersion liquid may spill or move into the adjacent honeycomb cavities.

Also, another advantage of the improved type is that due to the excellent function for containing the dispersion liquid (micro miniaturization and high sealing property), it is possible to coat microcapsules on to a soft thin film to form the display sheet into an endless roll to obtain a display that may rotate between rotary shafts at both ends.

As the sealed containers for containing the dispersion liquid is remarkably microminiaturized by the microcapsules 7, the following functional advantage can be obtained. That is, for responding to the application of a magnetic field by an operation using a magnetic pen or the like for writing, the black magnetic fine particles 10 that form the character and image written on the front surface of the display by moving to the front surface side of the display (Part "B" in Fig. 6) can be precipitated and settled to the bottoms of the respective microcapsules 7 to keep their relative positions as is (Part "C" in Fig. 6), after the image formation, i.e., maintaining their positions such that the black magnetic fine particles 10 locate on the top side while light-reflective non-magnetic fine particles 11 locate on the bottom side. Any character or image formed by the black magnetic fine particles 10 thus stably settled state can be displayed on the front surface of the display through the transparent substrate 8, the transparent microcapsule wall membrane, and the transparent dispersant (supernatant portion) 17. This state can be kept until an erasing magnetic field is applied from the back surface side (Portion "A" in Fig. 6 indicates the state in which the display is erased).

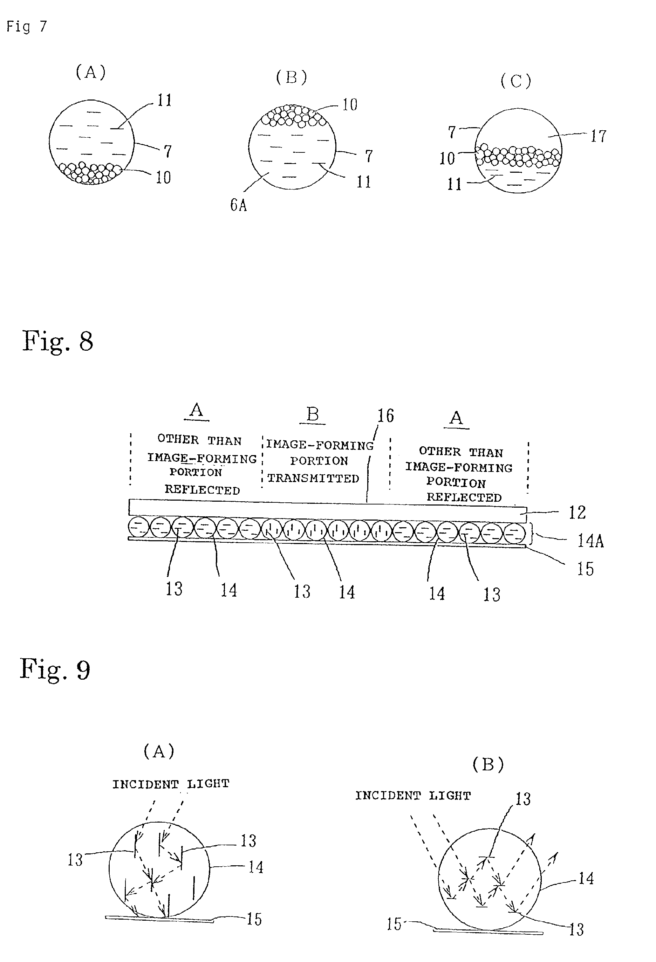

Fig. 7(A) is an enlarged view of the microcapsules 7 in a part of the part "A" in Fig. 6. The application of an erasing magnetic field from the back surface of the display attracts black magnetic fine particles 10 into the bottoms of the respective microcapsules 7, resulting in the vertical shifting of their positions with the light-reflecting non-magnetic fine particles 11 located in the bottom of the microcapsules 7. At the time of such a shifting, the light-reflective non-magnetic fine particles 11 are suspended in the upper portion of the dispersion liquid. If they are left as they are, sooner or later they can be settled and stably placed on an aggregated layer of the magnetic particles of the black magnetic fine particles 10 in the bottom as shown in Fig. 7(C).

Fig. 7(B) is an enlarged view of the microcapsules 7 in a part of the part "B" in Fig. 6. By the application of a writing magnetic field from the front surface of the display, the black magnetic fine particles 10 are attracted to the front surface, while the position of the black magnetic fine particles 10 is shifted with the light-reflective non-magnetic fine particles 11. While in such a positional shifting, the light-reflective non-magnetic fine particles 11 are in the state of being suspended.

Fig. 7(C) is an enlarged view of a microcapsule 7 in a part of the part "C" in Fig. 6. The writing magnetic field is removed from the state shown in Fig. 7(B), followed by the sedimentation of the black magnetic fine particles 10 and the light-reflective non-magnetic fine particles 11 without changing their relative positions because of their short sediment distances. In the bottom of the microcapsule 7, therefore, they keep their stabilities such that the aggregated black magnetic fine particles 10 are located at the upper portion while the aggregated light-reflective non-magnetic fine particles 11 are located at the lower portion.

Further, if the display sheet is finished as an endless roll to be used as a rotatable-roll display, the display surface is vertically placed in general. In this case, however, the black magnetic fine particles that form the character or image are aggregated on the front surface of the display, while the light reflective non-magnetic fine particles are kept in stable in the state of being aggregated.

As described above, the improved magnetic display holds the character or image as is once formed on the front surface of the display, so that a perfectly stable display can be maintained until the erasing magnetic field is applied thereto. On the other hands, in the case of containing the dispersion liquid in the conventional honeycomb small cavities 3 shown in Fig. 5, the small cavities 3 have comparatively large dimensions and thus granulated black color magnetic particles 5 having comparatively large dimensions are necessitated according to the dimensions of the small cavities 3. Therefore, the black color magnetic particles 5 with a heavier in weight precipitates with the passage of time and settled at deep bottom of the respective small cavities 3. As a result, they are invisible from the front surface of the display, resulting in the fear of disappearing the character or image. For taking countermeasures against such a problem, it is inevitable to use a comparatively large amount of a sedimentation-preventing agent to thicken the viscosity of the dispersant, resulting in the reduction in a sedimentation rate. Comparing with the conventional type, using the microcapsules 7 as micro containers for containing the dispersion liquid leads to the effects in which the improved magnetic display allows an excellent resource saving effect as described above and the stability of image being formed by the magnetic fields are extremely excellent.

The magnetic display of the above (2) shown in Fig. 8 is constructed such that onto a transparent non-magnetic sheet 12, a microcapsule layer 14A in which fine magnetic flakes 13 having a shape anisotropy are dispersed in an oily liquid, are sealed and a black protective film 15 of microcapsules 14 are applied laminably in the stated order. Then, a magnetic field is applied to the display surface in the horizontal direction, to thereby cause the magnetic flakes 13 in the microcapsules 14 to be horizontally oriented, bringing the magnetic display to a state of allowing the reflection of an incident light. Subsequently, a vertical magnetic field is spottedly applied in a shape of a character or image onto the display surface, bringing the magnetic display to a state of allowing the transmission of the incident light. As a result, an image can be formed using a color contrast between the reflection and transmission of the incident light to be caused.

The dispersion liquid sealing in microcapsules to be used in this magnetic display uses fine flat flakes having a shape anisotropy of from several microns to several tens microns as magnetic flakes 13. Accordingly, microcapsules which are smaller than the improved microcapsules of the above item (1) have been used as the containers for containing the dispersion liquid.

Fig. 9(A) is an enlarged view of a microcapsule 14 corresponding to a portion (Part "B" of Fig. 8) onto which the vertical magnetic field is applied. Fig. 9(B) is an enlarged view of a microcapsule 14 corresponding to a portion (Part "A" of Fig. 8) onto which the horizontal magnetic field is applied. As shown in the figure, an incident light reflects on the vertical surface of the magnetic flakes 13 vertically oriented in the microcapsule 14 one after another, and then the incident light reaches to a black protective film 15 on the bottom as a transmitted light. This portion becomes an image formation portion of a black color. Therefore, a contrast can be generated between such a portion and its surrounding portions on which the magnetic flakes 13 are horizontally oriented i.e., the reflection on the horizontally-oriented surface.

The magnetic display of the above (1) is characterized in that a character or image is formed from a black color inherent to the magnetic particles such as black iron oxide fine particles on a white background to be caused by a white pigment such as titanium dioxide as the light-reflective non-magnetic fine particles. The magnetic particles move to the front surface side by the application of a writing magnetic field from the outside to form a black-colored image. Inversely, the light-reflective non-magnetic fine particles are hardly subjected to the magnetic induction even though the external magnetic field is applied thereto, because they are non-magnetic particles, moving in the direction opposite to the movement of the magnetic particles. In other words, the magnetic display operates on the principle in which the non-magnetic particles passively move to the back surface of the display. However, as the black-colored magnetic particles and the white-colored light-reflective non-magnetic fine particles are used for the image-forming elements, the magnetic display is the so-called monochrome type by which an image to be formed is basically of a black color with a white background.

An attempt at colorization of the magnetic display of the above (1) type is conducted from the beginning of development of the (1) type magnetic display. Of those, such a colorization method was the addition of a color material into a dispersion liquid in which black iron oxide fine particles as magnetic particles and titanium dioxide as light-reflective non-magnetic fine particles were dispersed. This method which is used for the above-mentioned (2) type magnetic display disclosed in Japanese Patent Application Laid-open No. Sho 50-160046 is converted into the above-mentioned (1) type magnetic display.

The magnetic display disclosed in Japanese Patent Application Laid-open No. Sho 50-160046 is a colorized magnetic responsive shutter display in which a liquid with a dispersion of magnetic flakes having a shape anisotropy is sealed in the microcapsules and then the microcapsules are applied on to a sheet. For colorization, the above-mentioned patent application discloses three choices depending on where the color materials can be added, i.e., (a) the wall of the microcapsule; (b) the dispersion liquid in the microcapsules; and (c) the microcapsule-coated layer.

Also, thereafter, Japanese Patent Application Nos. Hei 11-23826 and Hei 11-23886 disclose an attempt to color the image forming element of the (1) type magnetic display per se.

The colorization by the three options in the magnetic display disclosed in the above-mentioned Japanese Patent Application Laid-open No. Sho 50-160046 is the colorization by an addition of dye or pigment into any one of the capsule wall, dispersion liquid and capsule coating liquid but is not the attempt to change into another color the black color inherent in black iron oxide fine particles which are the forming element of the character and the image. If this colorization is used in the above-mentioned (1) type magnetic display, the effect of colorization reaches the portion exhibiting a white color with the white pigment such as titanium dioxide that is the light-reflective non-magnetic fine particles by the added coloring material. However, there is no change in the color of the image to be formed, and is the black color inherently exhibited by an aggregation of the black iron oxide fine particles.

Also, since the colored magnetic particles disclosed in Japanese Patent Application Nos. Hei 11-23826 and Hei 11-23886 are over-coated by the color resin, the diameter of the fine magnetic particles granulated and over-coated becomes excessive (50 to 200 µm), and also since the coloring method thereof is the coating by the color resin, it is inevitable to considerably reduce the saturated magnetization of the coloring magnetic fine particles (20 emu/g) in accordance with the amount of the added resin.

The diameters of the magnetic fine particles disclosed in the two Japanese Patent applications are too excessive and are not suitable for use in microcapsules in a sealing manner. Also, the saturated magnetization of the magnetic fine particles coated by the resin for coloring is deteriorated in accordance with the increased amount of the resin. Also, a honeycomb-like small cavity type display that may utilize the relatively large diameter of the magnetic fine particles suffers from a fault that the magneticphoresis speed is significantly delayed due to the insufficiency of the magnetic induction. This has not been put on the commercial market.

### SUMMARY OF THE INVENTION

A primary object of the present invention is to provide a magnetic display that may readily change a character or image of black color formed by means of magnetic particles such as black iron oxide fine particles, into a variety of interference colors with a simple structure without damaging the function of the conventional magnetic display.

Another object of the present invention is to provide a magnetic display capable of forming a character or image which are colored other than a black color on a background which is colored other than a white color by using colorization of the background portion of the image or character forming portions using a coloring material, which is disclosed in the above-mentioned Japanese Patent Application Laid-open No. Sho 50-160046, in addition to the above-mentioned colorization of the character or image of black color only.

In order to attain these and other objects, according to a first aspect of the present invention, there is provided a magnetic display in which a microcapsule layer containing and sealing light-reflective non-magnetic fine particles and black magnetic fine particles dispersed in an oily liquid is applied in a space between the two non-magnetic substrates at least one of which is transparent to form a display sheet, a magnetic field for forming a character or image is applied from a surface of the display with a transparent substrate side being a front surface thereof and a magnetic field for erasing the character or image is applied from a back surface thereof so that positions of the black magnetic fine particles and the light-reflective non-magnetic fine particles within the microcapsules are inverted to thereby form the character or image, characterized in that a pearl pigment layer exhibiting a variety of interference colors is applied onto the top surface or the back surface of the transparent substrate used as the front surface side of the display out of the two non-magnetic substrates so that the display structure takes one of a ) a laminate layer composed of the pearl pigment layer, the front surface side transparent substrate, the microcapsule layer and the back surface side substrate in the stated order and b) a laminate layer composed of the front surface side transparent substrate, the pearl pigment layer, the microcapsule layer and the back surface side substrate in the stated order, whereby the character or image of the black color that is the color inherent in the black magnetic fine particles formed on the front surface of the display is changed into the interference color such as yellow, red, blue, or green of each pearl pigment.

With such an arrangement, the magnetic field for forming the character or image from the front surface of the display so that the character or image of the black color that is the color inherent in the black magnetic fine particles formed on the front surface of the display may be changed into the color suitably selected in accordance with the use out of the interference colors such as yellow, red, blue, and green of each pearl pigment.

According to a second aspect of the invention, the microcapsule layer according to the first aspect is colored with dye or pigment to give an effect of the interference color also to the background of the character or image forming portion to thereby obtain a color contrast of the mutual interference colors generated in both the character or image forming portion and the background as well.

With such an arrangement, since it is possible to obtain the color contrast of the mutual interference colors generated in both the character or image forming portion to be formed on the surface of the display and the background thereof, it is possible to further increase the number of options of the colors of the color display.

According to a third aspect of the present invention, there is provided a magnetic display in which a space of the two non-magnetic substrates at least one of which is transparent is partitioned into small cavities by a honeycomb partitioning wall or any other cell partitioning wall and a dispersion liquid in which light-reflective non-magnetic fine particles and black magnetic fine particles and/or granular fine particles thereof are dispersed is filled in the small cavities, characterized in that a pearl pigment layer exhibiting a variety of interference colors is applied onto a front surface or a back surface of the surface side substrate of the display, whereby the character or image of the black color that is the color inherent in the black magnetic fine particles and/or granular fine particles formed on the surface of the display is changed into the interference color such as yellow, red, blue, or green of each pearl pigment.

With such an arrangement, the character or image of the black color which is inherent in the black magnetic fine particles and/or the granular fine particles thereof, which is to be formed on the surface of the display by applying the magnetic field for forming the character or image from the surface of the display, is changed into the color selected suitably from the interference colors such as yellow, red, blue, and green of each pearl pigment, whereby it is possible to obtain the magnetic display that may display the character or image in the color selected from the variety of colors other than the black while selecting the white of the conventional magnetic display of the white and black contrast as the background color.

According to a fourth aspect of the invention, the dispersion liquid filled in the above-mentioned small cavities according to the third aspect of the invention is colored by adding the dye or pigment thereto, to thereby give an effect of the interference colors not only on the character or image forming portion but on the background portion thereof to obtain the mutual contrast of the interference colors generated in both the character or image and the background portion thereof.

With such an arrangement, since it is possible to obtain the mutual color contrast of the interference colors generated in both the character or image forming portion formed on the surface of the display and the background thereof, it is possible to obtain the display in which the background color may be selected from the variety of colors other than the white of the conventional white background color and the character or image may be displayed on the background with a color selected from the variety of colors other than the black that is the forming color of the conventional character or image.

According to a fifth aspect of the present invention, there is provided a magnetic display in which a microcapsule layer containing and sealing fine magnetic flakes having a shape anisotropy and dispersed in an oily liquid and a protective film for the microcapsules are applied in the stated order on a transparent non-magnetic sheet, a horizontal magnetic field is applied to the surface of the display so that the magnetic flakes within the microcapsules are oriented in the horizontal direction to bring about the condition in which the incident light is reflected, and subsequently, a vertical magnetic field is spottedly applied in a shape of a character or image to the surface of the display to bring about the condition in which the incident light passes through, to thereby form an image utilizing a generated color contrast of the reflection and the transmission of the incident light, characterized in that a pearl pigment layer exhibiting a variety of interference colors is applied onto a front surface or a back surface of the transparent non-magnetic sheet so that the display structure takes either a) a laminate layer composed of the pearl pigment layer, the transparent non-magnetic sheet, the microcapsule layer and the black microcapsule protective film in the stated order or b) a laminate layer composed of the transparent non-magnetic sheet, the pearl pigment layer, the microcapsule layer and the black microcapsule protective film in the stated order, whereby the incident light passes through and the visible light is absorbed in the full wavelength range by the black protective film on the bottom portion so that the black color is changed into the interference color inherent in each pearl pigment.

With such an arrangement, the incident light passes through and the visible light is absorbed in the full wavelength range by the black protective film on the bottom portion so that the black color may be changed into the color suitably selected from the interference colors such as yellow, red, blue, and green of each pearl pigment.

### BRIEF DESCRIPTION OF THE DRAWINGS

In the accompanying drawings:
Fig. 1 is an illustration showing a magnetic display in accordance with a first embodiment of the present invention;
Fig. 2 is an illustration showing a magnetic display in accordance with a second embodiment of the present invention;
Fig. 3 is an illustration showing a magnetic display in accordance with a third embodiment of the present invention;
Fig. 4 is an illustration showing one example showing a condition that the surface of the magnetic display in accordance with Example 1 of the present invention is scanned by means of a magnetic pen;
Fig. 5 is an illustration showing one example of a conventional magnetic display;
Fig. 6 is an illustration of another example of a conventional magnetic display, in which part "A" indicates a condition that the display is erased, part "B" indicates a condition immediately after a magnetic field application by writing, and part "C" indicates a stable precipitated condition of the image forming portion after the magnetic field application;
Fig. 7(A) is an enlarged view of the microcapsules in the part "A" shown in Fig. 6, Fig. 7(B) is an enlarged view of the microcapsules in the part "B" shown in Fig. 6 and Fig. 7(C) is an enlarged view of the microcapsules in the part "C" shown in Fig. 6;
Fig. 8 is an illustration showing another example of a conventional magnetic display, in which part "A" indicates a portion to which the horizontal magnetic field is applied and part "B" indicates a portion to which the vertical magnetic field is applied; and
Fig. 9(A) is an enlarged view of a microcapsule of the part "B" shown in Fig. 8, and Fig. 9(B) is an enlarged view of a microcapsule of the part "A" shown in Fig. 8.

### DETAILED DESCRIPTION OF THE PREFERRED EMBODIMENTS

A magnetic display according to an embodiment of the present invention will now be described with reference to the accompanying drawing.

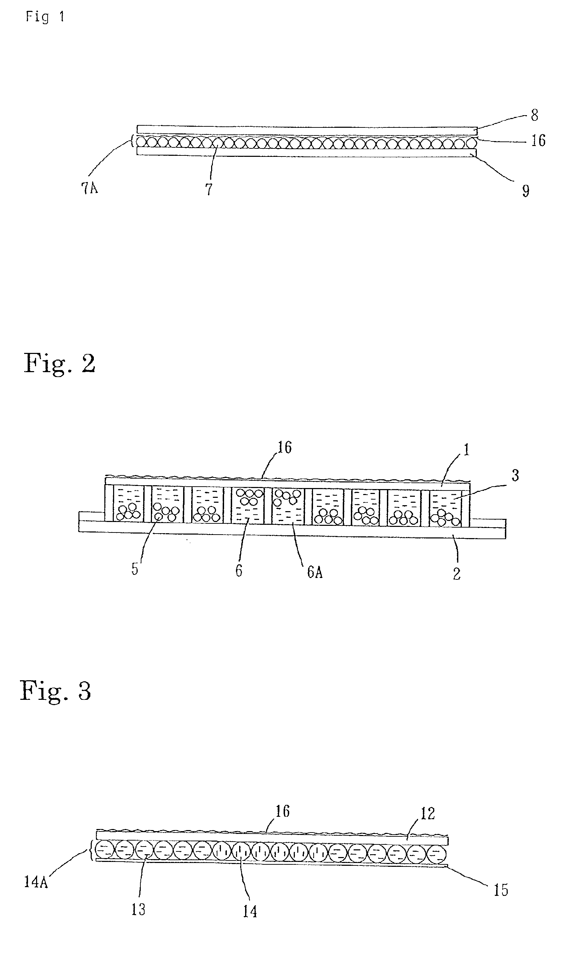

Fig. 1 shows a magnetic display in accordance with a first embodiment of the present invention. A microcapsule layer 7A sealing and containing black magnetic fine particles and light-reflective non-magnetic fine particles dispersed in oily liquid is applied between a non-magnetic transparent substrate 8 to be on the front surface side and a non-magnetic substrate 9 to be on the back side to form a display sheet. A magnetic field for forming a character or image is applied from the surface of the display with the non-magnetic transparent substrate 8 on the front surface side, and a magnetic field for erasing the character or image is applied from the back surface so that the positions of the black magnetic fine particles and the light-reflective non-magnetic fine particles within the microcapsules are inverted to thereby form the character or image. In this display, a pearl pigment layer 16 exhibiting a variety of interference colors is applied onto the back surface of the non-magnetic transparent substrate 8 to be used on the front surface side of the above-mentioned magnetic display. The magnetic display has a laminate structure composed of the non-magnetic transparent substrate 8, the pearl pigment layer 16, the microcapsule layer 7A and the non-magnetic substrate 9 in the stated order from the surface side of the display structure.

In this example, the pearl pigment layer 16 is applied onto the back surface of the non-magnetic transparent substrate 8. It is, however, possible to apply the pigment layer 18 onto the surface of the non-magnetic transparent substrate 8 so that the structure of the display may be a laminate structure composed, from the surface side of the pearl pigment layer 16, the non-magnetic transparent substrate 8, the microcapsule layer 7A and the non-magnetic substrate 9 (not shown).

Also, it is possible to color the above-mentioned microcapsule layer 7A with dye or pigment (not shown). The coloring of the microcapsule layer 7A has three options of "in the wall of the microcapsules", "in the dispersion liquid in the microcapsules" and "in the coating layer of the microcapsules" according to the section of the component where the coloring material is added, and there is no particular limitation.

Fig. 2 shows a magnetic display in accordance with a second embodiment of the present invention. A space between a non-magnetic transparent substrate 1 to be the surface side and a non-magnetic substrate 2 to be the back side is partitioned into small cavities 3 by cell walls such as a honeycomb partitioning wall or the like. Dispersion liquid in which the black magnetic fine particles and/or granular fine particles thereof and the light reflective non-magnetic fine particles are dispersed in an oily liquid is filled in the small cavities 3. A pearl pigment layer 16 exhibiting a variety of colors is applied onto the surface of the non-magnetic transparent substrate 1 to be used on the surface side of the above-mentioned magnetic display.

In this example, the pearl pigment layer 16 is applied onto the front surface of the non-magnetic transparent substrate 1. It is, however, possible to apply the pearl pigment layer 16 on the back surface of the non-magnetic transparent substrate 1 (not shown). Also, the dispersion liquid to be filled in the above-mentioned small cavities 3 may be provided with the dye or pigment to be colored.

Fig. 3 shows a magnetic display in accordance with a third embodiment of the present invention. A microcapsule layer 14A sealing and containing fine magnetic flakes dispersed in an oily liquid and having a shape anisotropy and a black protective film 15 for protecting the microcapsules 14 are applied in the stated order to a transparent non-magnetic sheet 12 to form the display. A magnetic field is applied in the horizontal direction to the display surface so that the magnetic flakes within the microcapsules 14 are oriented in the horizontal direction to bring about the condition in which the incident light is reflected. Subsequently, a magnetic field is spottedly applied in the vertical direction to the display surface so that the incident light passes through and the generated color contrast of the reflection and the transmission of the incident light are utilized to form the image. A pearl pigment layer 16 exhibiting a variety of interference colors is coated on the surface of the above-mentioned transparent non-magnetic sheet 12. The laminate structure of the display is composed, in order from the surface side, of the pearl pigment layer 16, the transparent non-magnetic sheet 12, the microcapsule layer 14A and the black protective film 15.

In this example, the pearl pigment layer 16 is applied onto the surface of the transparent non-magnetic sheet 12. It is, however, possible to apply the pigment layer 16 onto the back surface of the transparent non-magnetic sheet 12 so that the structure of the display may be a laminate structure composed, from the surface side, of the transparent non-magnetic sheet 12, the pearl pigment layer 16, the microcapsule layer 14A and the black protective layer 15 (not shown).

In the pearl pigment layer 16 shown in each embodiment of the present invention, when the black magnetic fine particles or the granular fine particles thereof is aggregated to form the image, the black color is changed into a variety of colors without specially coloring the magnetic fine particles or the granular fine particles or applying the magnetic fine particles or the granular fine particles with a coloring resin and the image of the interference colors is formed on the background having a white color such as titanium dioxide. In addition, the microcapsule layer or the dispersion liquid of the magnetic fine particles and the non-magnetic fine particles may be conventionally colored. As a result, the background color of the image forming portion is also affected by the interference color. The contrast between the different interference colors is utilized by using the interference colors for both the image forming portion and the background portion.

More specifically, the interference color means a spectral color exhibited when the pigment fine particles of the multi-layer structure obtained by overlapping crystals like "scales", for example, mica, many times is aligned in parallel in the coating layer so that the incident light repeats the reflection and transmission regularly, and the reflective lights are interfered with each other to thereby intensify a constant wavelength in a constant direction.

It is well known that a thin layer of liquid crystal of a cholesteryl ester-based liquid crystal exhibits an interference color. The rainbow color like feathers of a peacock when the thin layer of this liquid crystal is observed under the white light is the interference color obtained as a result of the selective reflection of the light in the visible wavelength range. The factor for determining this wavelength is a temperature (a pitch of a spiral structure in a molecule is decreased in accordance with the elevation of the temperature). In general, a red ray is reflected at a lower temperature and a green ray, a blue ray and a purple ray are reflected in the stated order in accordance with the elevation of the temperature. Normally, in this crystal liquid, the dark color is used in the background to thereby make it possible to absorb the complementary color component and to intensify the reflective color.

The pearl pigment that has been extensively used to give the pearl effect to the color print or coloring of plastics is composed of a thin film of mica exhibiting the interference color. In the mica, silicate units are arranged in a plain manner and anion water molecules or hydroxide ions are present between the plain surfaces to exhibit a layer-like cleavage, and the mica is likely to become thin pieces like flakes.

The thin pieces are formed into flake-like matters in various shapes having a thickness of 0.1 to 1.0 µm, and the surface thereof is coated with a single layer of titanium dioxide (TiO₂) or a composite layer of titanium dioxide and cassiterite (tin dioxide, SnO₂) to be used as pigment fine particles to obtain the pearl pigment. The feature of this pigment is that the thickness of the coating of the metal oxide such as titanium dioxide (TiO₂) or the like is gradually increased to change the reflective wavelength of the light and when laminated on the black background, yellow, red, purple, blue and green are exhibited as the reflective colors.

The coating layer of the pearl pigment having such a feature, i.e., the pearl pigment layer 16 is coated in a laminate manner over the full surface region of the display on the surface side of the surface substrate of the display or between the surface substrate and the microcapsule layer in which the image forming elements are sealed so that the black color that is an inherent color exhibited by aggregation of the black magnetic fine particles for image formation may be changed into a variety of colors such as yellow, red, purple, blue, and green. Also, when the coating layer of the pearl pigment is not applied to the full surface region of the display surface but is applied to one half thereof, for example, the display may exhibit the color image by the interference color on one half area and exhibit the black image on the other half are in the same manner as in the conventional case. Furthermore, it is possible to laminate the pearl pigments that may exhibit the different interference colors for each divided screen by dividing the display surface.

As described above, with respect to the feature of the interference color, the dark color is used as the background color to thereby absorb the complementary color component and to intensify the reflective color inherent in the interference color. In contrast, when the white color is used as the background color, the incident light is disturbed so that the interference color is weakened and the color is not recognized. In the first and second embodiments of the present invention, the pearl pigment layer 16 exhibiting the interference color is applied to the surface or the back surface of the non-magnetic transparent substrates 8, 1 and the magnetic field for forming the character or image is applied from the surface of the display so that the character or image of the black color that is the color inherent in the black magnetic fine particles to be formed on the display surface is changed into an interference color selected from yellow, red, blue, green or the like of each pearl pigment.

Also, if the microcapsule layer 7A of the first example is colored conventionally with dye or pigment, the effect of the interference color reaches the character or the background of the character of image forming portion, it is possible to obtain a color contrast of the interference colors mutually generated on the character or image forming portion to be formed on the display and the background portion.

Also, if dye or pigment is added to the dispersion liquid to be filled in the small cavities 3 of the second embodiment of the invention to be colored, the effect of the interference color reaches also the background of the character or image forming portion, and it is possible to obtain a color contrast of the interference colors generated mutually on the character or image forming portion to be formed on the surface of the display and the background.

Also, in the third example of the embodiment of the present invention, the pearl pigment layer 16 exhibiting the above-mentioned interference color is applied onto the front surface or the back surface of the transparent non-magnetic sheet 12 and the magnetic field is applied to the display surface in the horizontal direction so that the magnetic flakes within the microcapsule are oriented under a condition in which the incident light is reflected. Subsequently, when the magnetic field is locally applied in the vertical direction to the display surface so as to be in a condition in which the incident light is transmitted, the incident light passes therethrough and the visible light in the full wavelength range is absorbed by the black protective film located at the bottom to thereby change the exhibited black color into the interference color inherent in each pearl pigment.

### EXAMPLES

The present invention will now be described with reference to the more specific examples. It will be however understood that the present invention is not limited to these specific embodiments.

### Example 1

To a main ingredient of 10 parts by weight of urethane two-liquid reactive type medium VIC-800 (manufactured by Seiko Advance Co., Ltd.), a hardener of one part and T-990 solvent of 3 parts were mixed and agitated. In addition, particles of 2 parts of pearl pigment 7225WNT (manufactured by Merck Ltd.) was added to the mixture and agitated, thereby obtaining a pearl pigment coating liquid in which the pearl pigment fine particles were uniformly dispersed.

This pearl pigment coating liquid was screen-printed to have a wet thickness of about 30 µm on the overall surface of a transparent PET (polyethylene terephthalate) sheet of 340 mm x 255 mm having a thickness of 100 µm, which is a non-magnetic material to be used as a substrate on the surface side by using a screen of 150 meshes and had been dried for 30 minutes in an oven whose temperature was set to 70°C, thereby obtaining the PET sheet provided with a coating layer having a dry thickness of 10 µm of the pearl pigment 7225WNT (manufactured by Merck Ltd.).

Subsequently, microcapsules, which contains and seals therein the magnetic fine particles made of black iron oxide fine particles and fine particles of titanium dioxide that is the light-reflective non-magnetic material, and which is used in the magnetic display of the first aspect of the present invention, are made as a microcapsule slurry (suspension) having a particle diameter of about 300 µm according to the method disclosed in Japanese Patent Application Laid-open Nos. Hei 2-146082 and Hei 4-233581. After discharging a supernatant liquid thereof, urethane emulsion was added as binder to obtain a microcapsule coating liquid.

This microcapsule coating liquid was applied so as to have a wet thickness of 700 µm with a coater on the coating layer of the pearl pigment of the PET sheet, to which the pearl pigment 7225WTN (manufactured by Merck Ltd.) was applied, and which was prepared previously, to obtain its dry thickness of 300 µm after drying. This coating layer for the microcapsules were applied so that the pearl pigment coating layer using the PET substrate, the coating layer for the microcapsules and the PET sheet having 75 µm to be a back side substrate for protecting the microcapsule layer were bonded together by adhesives to obtain a magnetic display utilizing an interference color of the structure obtained by laminating the PET sheet, the pearl pigment layer, the microcapsule layer and the PET sheet in the stated order.

When this display was scanned by a magnetic pen from the surface side substrate, the black iron oxide fine particles within the microcapsules positioned in the portion of the scanned locus received magnetic induction to be moved on the surface side so that the position thereof was replaced by the position of the titanium dioxide that was the light-reflective non-magnetic material located at the position within the microcapsules and the scanned image of blue color that was the interference color of the pearl pigment 7225WNT was obtained instead of the black color inherent in the black iron oxide fine particles (see Fig. 4).

### Example 2

A coating liquid of the six kinds of pearl pigments of pearl pigments 7205WNT, 7215WNT, 7217WNT, 7219WNT, 7225WNT and 7235WNT (manufactured by Merck Ltd.) was prepared in the same manner as in Example 1. These six kinds of coating liquids were screen-printed so as to have a wet thickness of about 30 µm by using each screen of 150 meshes on each divided surface whose size was 340 mm x 255 mm that was the non-magnetic material to be the substrate on the surface side and was dried in an oven whose temperature was set as 70°C. A PEC sheet provided, on each divided area thereof, with the dry thickness of 10 µm of coating layers of respective six kinds of pearl pigments, was obtained as shown in the following.

(Example in which the display surface is divided and each divided area shows a different interference color)

| | | |
|---|---|---|
| 7205WNT | 7215WNT | 7217WNT |
| Gold | Red | Brown |
| 7219WNT | 7225WNT | 7235WNT |
| Purple | Blue | Green |

The coating liquid of the microcapsules sealing and containing the magnetic fine particles made of black iron oxide fine particles and the titanium dioxide fine particles that was the light-reflective non-magnetic material used in the above-mentioned Example 1 was applied to this PET sheet on its coating layer of the pearl pigments so as to have a wet thickness of 700 µm with a coater to obtain its dry thickness of 300 µm after drying. A magnetic display was obtained, which utilizes the interference colors in which each coating layer of the pearl pigment and the microcapsules was laminated between the two PET sheets.

When this display was scanned by a magnetic pen from the surface side substrate so as to pass through each of the six kinds of pearl pigment laminate portions, the black iron oxide fine particles within the microcapsules positioned in the portion of the scanned locus received magnetic induction to be moved on the surface side so that the position thereof was replaced by the position of the titanium dioxide that was the light-reflective non-magnetic material located at the position within the microcapsules. In the display surface, the black color inherent in the black iron oxide fine particles was changed into each of gold, red, brown, purple, blue and green colors, each of which was the six kinds of the interference colors. The divided scanned image divided by these colors was obtained. Also, when a permanent magnet having a wide area in the same manner as an erasing magnet of the magnetic display was slidingly moved from one end to the other over the entire surface of the display on the substrate on the surface of the display, the magnetic induction is generated in the black iron oxide fine particle within the microcapsules located in the overall display region to be attracted and moved on the top surface of the display. The position of the light-reflective non-magnetic fine particles located there was replaced by the position on the back surface of the display, as a result of which a black aggregation color inherent in the iron oxide fine particles in the overall region of the display surface was changed into the color portions divided according to the six kinds of interference colors by multiple reflection and transmission caused by the passage of the black coagulation color.

Also, the coating materials of the pearl pigments 7225WNT (blue) and 7215WNT (red) were prepared in the same manner as in Example 1. The sheet having a size of 340 mm x 255 mm of PET that was the non-magnetic material was divided vertically into three portions and the pearl pigment was applied onto one third area on both ends by a silk screen method as shown in the following.

(Example showing a tricolor design of the national flag of France showing two different interference colors at both ends leaving a central portion of the display surface)

| | | |
|---|---|---|
| 7225WNT | | 7215WNT |
| Blue | | Red |

The coating liquid for the microcapsules sealing and containing the magnetic fine particles made of the black iron oxide fine particles and the titanium dioxide fine particles which were the light-reflective non-magnetic material used in the first embodiment was applied and dried on the PET sheet in the same manner as in Example 1 with the coater on the coating layer of the pearl pigments. A magnetic display utilizing the interference colors on which both coating layers of the microcapsules and the pearl pigments were laminated between the two PET sheets shown in Example 1 was obtained.

When the one-third area portions at both ends in the vertical direction of the magnetic display was slidingly moved from the upper edge to the lower edge in the vertical direction by a permanent magnet having a wider area than that of the substrate on the surface side of the magnetic display, the magnetic induction was generated in the black iron oxide fine particles within the microcapsules located at those positions and the black iron oxide fine particles were moved on the surface side of the display. The light-reflective non-magnetic fine particles located in those positions were replaced by the positions on the display back side. On the surface side of the display, in each one-third area portion at both ends in the vertical direction that is to exhibit the black coagulation color inherent in the black iron oxide fine particles, each left side was changed into the blue of the interference color of the pearl pigment 7225WNT and the one-third area on the right side was changed into the red of the interference color of the pearl pigment 7215WNT. In the one-third area in the middle in the vertical direction where the magnetic induction had not been generated, the white of the titanium dioxide that was the non-magnetic fine particles within the microcapsule in this portion was kept in the position on the surface side. On the surface of the display kept under this condition, the tricolor vertical stripes like the French national flag were shown.

Then, under the above-mentioned display condition, when the erasing magnet was slidingly moved from one end to the other end on the display back side, the black iron oxide fine particles within the microcapsule in the overall display region were moved to the back surface side of the display by the magnetic induction, and inversely, the titanium dioxide that was the light-reflective non-magnetic fine particles was moved toward the front surface of the display as a result of which the tricolor vertical stripes on the front surface was erased by its white. Under this erased condition, the interference colors of the pearl pigments were dispersed by the white of the titanium dioxide and did not show the interference colors so that the tricolor vertical strips could not be observed. This method for utilizing the pearl pigment was an applied example in which the pearl pigment layers in which a hidden character or image (for example, a character figure) is depicted on the display were laminated and a magnetic field was applied from the front surface so that the character or image might be visualized by the interference colors.

In this method, in the case where the interference colors reached only the one-third are portions at both ends of the display, when the scanning was effected by the magnetic pen from the front surface side of the display, in each one-third area at both ends, the scanning locus exhibited the blue and red color loci and the locus within the middle one-third area where the interference colors had not reached exhibited the black color.

### Example 3

In the same method according to Example 1, the coating liquid for the microcapsules containing and sealing both components of the black iron oxide fine particles and the titanium dioxide fine particles that is the light-reflective non-magnetic fine particles was obtained. Furthermore, added to this coating liquid were three kinds of water soluble dyes of yellow, blue and green (any one of which was manufactured by Orient Chemical Industries, Water Color) by 0.08 wt%, 0.05 wt% and 0.11wt%, respectively, to obtain the microcapsule coating liquid colored in the respective colors. The coating liquid was coated between the two PET substrates to obtain the three different color display sheets. When the scanning was performed from the surface side of the substrate for depicting the character or image, the locus portion exhibited the coagulation color of the black color inherent in the black iron oxide fine particles but the area therearound exhibited the colors colored by the respective dyes. That is, in this case, the coloring conceal of the white of the titanium dioxide that is the light-reflective non-magnetic fine particles when no dye is added was effected so that the character or image was formed on the background in a black aggregation color of the black iron oxide fine particles with which no conceal by the dye is not effected.

The microcapsule coating liquid thus colored by dyes was coated by a coater on the coating surface of each pearl pigment of five PET sheets, on which the pearl pigment for obtaining five different kinds of interference colors produced in the same method as in Example 1, and the fifteen magnetic displays in total coated between the two PET substrates were prepared. In these displays, the interference color by the pearl pigment layer reached the portion color-concealed by the titanium dioxide fine particles that is inherently white so that the individual and particular color contrast was obtained with respect to the interference color of the image forming portion as follows. Of those, only the combination of the green and the green in the lowermost line insufficiently exhibit the mutual color contrast. However, any one of the other fourteen combinations exhibited the excellent color contrast.

| (Color combination when the interference color reaches both the background portion and the image forming portion) | | | |
|---|---|---|---|
| Coloring by dyes of microcapsule coating liquid | Interference color by pearl pigment layer | Color contrast of display surface | |
| | | Background portion | Image forming portion |
| Yellow | Green | Pale light yellow | Dark green |
| Yellow | Red | Pale light yellow | Dark red |
| Yellow | Brown | Pale light yellow | Dark brown |
| Yellow | Blue | Pale light blue | Dark blue |
| Yellow | Purple | Pale light purple | Dark purple |
| Blue | Green | Pale light green | Dark green |
| Blue | Red | Pale light blue | Dark red |
| Blue | Brown | Pale light blue | Dark brown |
| Blue | Blue | Blue | Dark blue |
| Blue | Purple | Purple | Dark purple |
| Green | Red | Pale light gray | Dark red |
| Green | Brown | Pale light green | Dark brown |
| Green | Blue | Pale light blue | Royal blue |
| Green | Purple | Pale light purple | Dark purple |
| Green | Green | Green | Dark green |

### Other Embodiment Modes

In a conventional magnetic display in which an interval between two substrates were divided into honeycomb small cavities and magnetic fine particles, titanium oxide fine particles and the like were dispersed, a coating liquid of a pearl pigment with the same formulation as used in Example 1 was printed and dried on the front surface side of the display panel with the above-mentioned structure by using the same screen of 150 meshes to obtain the conventional magnetic display panel provided with a pearl pigment layer.

When the display was scanned from the front surface side, in the scanning locus, the black aggregation color of the black iron oxide fine particles was changed into the blue that is the interference color inherent in 7225WNT (manufactured by Merck Ltd.).

In this conventional panel, since the pearl pigment layer was provided on the front surface side of the panel, there was a fear that the wear of the pearl pigment layer was generated by a tip of a magnetic pen scanned frequently by the magnetic pen for forming a character or image. Accordingly, it is preferable to laminate another protective film that has anti-wear property on the top surface of the pearl pigment layer.

Also, in the display in which the condition where the orientation within a microcapsule of magnetic flakes was kept in the horizontal direction was changed in the vertical direction by the magnetic head within the microcapsules containing and sealing the fine magnetic flakes having a shape anisotropy and dispersed in an oily liquid so that the character or image at the transparent portion was to be formed on the reflective surface of the incident light, the above-mentioned microcapsule layer was applied onto the pearl pigment layer of the PET provided with the pearl pigment layer with the formulation used in Example 1. A test piece in which the coating layer was covered with the black protective film was prepared and the condition in which the black color of the character forming portion was changed into the interference color by the pearl pigment layer was inspected.

As a result, in comparison with Example 1, a color contrast was relatively weak. The reason for this was that the whiteness was insufficient and the color contrast was observed to be weak in the method of using the character formation by pin dots with fine sizes. Accordingly, the vertical magnetic field was applied to the overall surface of the display and the effect of colorization in a wider range was examined. As a result, it was confirmed that the effect was sufficiently exhibited.

Also, with the test piece in which the pearl pigment additional amount of the pearl pigment coating liquid according to Example 1 was one part (namely, the amount of addition was reduced to one half), the color contrast was enhanced also in the character formation by the pin dots. In other words, it was understood that the enhancement of the color contrast was obtained by substantially moderating the intensity of the interference color for the display in this test piece where it utilizes the contrast of the reflection and the transmission of the incident light in the shifting of the orientation direction of the flat magnetic fine flake particles with the shape anisotropy having a metallic gloss surface, contrary to the display which uses the titanium dioxide that is the light-reflective non-magnetic fine particles and intensively disturbed the incident light.

Also, according to a series of experiments, it was found that the effect of colorization of the interference color might considerably be different by the formulation of the pearl pigment and the kind of the pearl pigment. Namely, if the coating metal oxide of the mica thin film (Mica+SnO₂+TiO₂) was the same, the apparent density was substantially the same and the upper limit of the diameter of fine particles are substantially the same, the effect of each interference color by the thickness of the coating film was better with the wider range of formulation of the granular distribution than the narrow formulation. Also, the required amount of the pearl pigment for obtaining the color effect by the interference color was in the range of 0.5 to 12.0 g/m², and more preferably in the range of 2.0 to 8.0 g/m².

In order to obtain the required pearl pigment layer, it is possible to use methods other than the coating with the coater or screenprinting. However, it is possible to obtain the desired effect by formulating and designing so as to have the above-mentioned required amount in the respective methods.

As described above, according to the first aspect of the present invention, the magnetic display is constructed such that the microcapsule layer containing and sealing light-reflective non-magnetic fine particles and black magnetic fine particles dispersed in the oily liquid is applied between two non-magnetic substrates at least one of which is transparent to form the display sheet, the magnetic field for forming the character or image is applied from the surface of the display with the transparent substrate side being the front surface thereof and the magnetic field for erasing the character or image is applied from the back surface thereof so that positions of the black magnetic fine particles and the light-reflective non-magnetic fine particles within the microcapsules are inverted to thereby form the character or image, in which the pearl pigment layer exhibiting the variety of interference colors is applied onto the front surface or the back surface of the transparent substrate used as the front surface side of the display out of the two non-magnetic substrates. With such an arrangement, by applying the magnetic field for forming the character or image from the surface of the display, the character or image of the black color that is the color inherent in the black magnetic fine particles formed on the surface of the display may be changed into the character or image of the black color that is the color inherent in the black magnetic fine particles formed on the surface of the display is changed into the interference color such as yellow, red, blue, or green of each pearl pigment. As a result, a magnetic display can be obtained, in which the character or image, which are formed by the application of the magnetic field, can be displayed on the white background with a color selected from the variety of colors other than the conventional black, which have never been obtained in the conventional magnetic display.

According to the second aspect of the present invention, the microcapsule layer in the first aspect of the invention is colored with dye or pigment, with the result that it is possible to obtain the color contrast of the mutual interference colors generated in both the character or image forming portion to be formed on the surface of the display and the background thereof. As a result, a magnetic display is obtained, in which the colored character or image can be displayed on the colored background, which have never been conceived in the conventional art.

According to the third aspect of the present invention, the magnetic display is constructed such that the interval of two non-magnetic substrates at least one of which is transparent is partitioned into small cavities by the honeycomb partitioning wall or any other cell partitioning wall and the dispersion liquid in which light-reflective non-magnetic fine particles and black magnetic fine particles and/or granular fine particles thereof are dispersed is filled in the small cavities, in which a pearl pigment layer exhibiting the variety of interference colors is applied onto the front surface or the back surface of the surface side substrate of the display. With such an arrangement, by applying the magnetic field for forming the character or image from the surface of the display, the character or image of the black color that is the color inherent in the black magnetic fine particles or the granular fine particles thereof formed on the surface of the display can be changed into the interference color such as yellow, red, blue, or green of each pearl pigment. As a result, the applicability of the display can be enhanced in various fields.

According to the fourth aspect of the invention, the dispersion liquid filled in the above-mentioned small cavities according to the third aspect of the invention is colored by adding dye or pigment thereto. With such an arrangement, it is possible to obtain the mutual color contrast of the interference color generated in both the character or image forming portion formed on the surface of the display and the background thereof. As a result, the applicability of the display can be further enhanced in various fields.

According to the fifth aspect of the invention claimed invention, the magnetic display is constructed such that the microcapsule layer containing and sealing fine magnetic flakes having the shape anisotropy and dispersed in the oily liquid and the protective film for the microcapsules are applied in the stated order on the transparent non-magnetic sheet, the horizontal magnetic field is applied to the surface of the display so that the magnetic flakes within the microcapsules are oriented in the horizontal direction to bring about the condition in which the incident light is reflected, and subsequently, the vertical magnetic field is partially applied to the surface of the display to bring about the condition in which the incident light passes through, to thereby form the image utilizing the generated color contrast of the reflection and the transmission of the incident light, in which the pearl pigment layer exhibiting the variety of interference colors is applied onto the front surface or the back surface of the transparent non-magnetic sheet. With such an arrangement, the incident light passes through and the visible light is absorbed in the full wavelength range by the black protective film on the bottom portion so that the black color can be changed into the interference color such as yellow, red, blue, or green of each pearl pigment. As a result, the applicability of the display can be enhanced in various fields.

## Claims

1. Amagnetic display in which a microcapsule layer containing and sealing light-reflective non-magnetic fine particles and black magnetic fine particles dispersed in an oily liquid is applied in a space between two non-magnetic substrates at least one of which is transparent to form a display sheet, a magnetic field for forming a character or image is applied from a surface of the display with a transparent substrate side being a front surface thereof and a magnetic field for erasing the character or image is applied from a back surface thereof so that positions of the black magnetic fine particles and the light-reflective non-magnetic fine particles within the microcapsules are inverted to thereby form the character or image, wherein a pearl pigment layer exhibiting a variety of interference colors is applied onto the front surface or the back surface of the transparent substrate used as the front surface side of the display out of the two non-magnetic substrates so that the display structure takes one of a) a laminate layer composed of the pearl pigment layer, the surface side transparent substrate, the microcapsule layer and the back surface side substrate in the stated order and b) a laminate layer composed of the front surface side transparent substrate, the pearl pigment layer, the microcapsule layer and the back surface side substrate in the stated order, whereby the character or image of the black color that is the color inherent in the black magnetic fine particles formed on the surface of the display is changed into the interference color such as yellow, red, blue, or green of each pearl pigment.

2. A magnetic display according to claim 1, wherein the microcapsule layer is colored with dye or pigment to give an effect of the interference color also to the background of the character or image forming portion to thereby obtain a color contrast of the mutual interference colors generated in both the character or image forming portion and the background.

3. A magnetic display in which a space between two non-magnetic substrates at least one of which is transparent, is partitioned into small cavities by a honeycomb partitioning wall or any other cell partitioning wall and a dispersion liquid in which light-reflective non-magnetic fine particles and black magnetic fine particles and/or granular fine particles thereof are dispersed is filled in the small cavities, wherein a pearl pigment layer exhibiting a variety of interference colors is applied onto a front surface or a back surface of the surface side substrate of the display, whereby the character or image of the black color that is the color inherent in the black magnetic fine particles formed on the surface of the display is changed into the interference color such as yellow, red, blue, or green of each pearl pigment.

4. A magnetic display according to claim 3, wherein the dispersion liquid filled in the above-mentioned small cavities is colored by adding the dye or pigment thereto, to thereby give an effect of the interference colors not only on the character or image forming portion but on the background portion thereof to obtain the mutual contrast of the interference colors generated in both the character or image and the background portion thereof.

5. A magnetic display in which a microcapsule layer containing and sealing fine magnetic flakes having a shape anisotropy and dispersed in an oily liquid and a protective film for the microcapsules are applied in the stated order on a transparent non-magnetic sheet, a horizontal magnetic field is applied to the surface of the display so that the magnetic flakes within the microcapsules are oriented in the horizontal direction to bring about the condition in which an incident light is reflected, and subsequently, a vertical magnetic field is partially applied to the surface of the display to bring about the condition in which the incident light passes through, to thereby form an image utilizing a generated color contrast of the reflection and the transmission of the incident light, wherein a pearl pigment layer exhibiting a variety of interference colors is applied onto a front surface or a back surface of the transparent non-magnetic sheet so that the display structure takes either a) a laminate layer composed of the pearl pigment layer, the transparent non-magnetic sheet, the microcapsule layer and the black microcapsule protective film in the stated order or b) a laminate layer composed of the transparent non-magnetic sheet, the pearl pigment layer, the microcapsule layer and the black microcapsule protective film in the stated order, whereby the incident light passes through and the visible light is absorbed in the full wavelength range by the black protective film on the bottom portion so that the black color is changed into the interference color inherent in each pearl pigment.
